# EUROPÄISCHE PATENTSCHRIFT

(11) **EP 3 020 039 B1**
(45) Veröffentlichungstag und Bekanntmachung des Hinweises auf die Patenterteilung: **14.06.2017**
(21) Anmeldenummer: 14736363.4
(22) Anmeldetag: 02.07.2014
(51) Int. Cl.: G10L 15/22, G01C 21/36, G06F 17/28

(54) **VERFAHREN UND EINRICHTUNG ZUR IDENTIFIZIERUNG UND AUSGABE DES INHALTS EINES HINWEISTEXTES**
METHOD AND DEVICE FOR IDENTIFYING AND OUTPUTTING THE CONTENT OF A TEXTUAL NOTICE
PROCÉDÉ ET SYSTÈME D'IDENTIFICATION ET DE SORTIE DU CONTENU D'UN TEXTE INFORMATIF

(30) Priorität: 08.07.2013 DE 102013213337
(43) Veröffentlichungstag der Anmeldung: 18.05.2016
(73) Patentinhaber: Continental Automotive GmbH, 30165 Hannover (DE)
(72) Erfinder: BELHOULA, Abdelkarim, 35614 Asslar (DE)
(86) Internationale Anmeldenummer: PCT/EP2014/064066
(87) Internationale Veröffentlichungsnummer: WO 2015/003971

(56) Entgegenhaltungen:
- EP-B1- 1 507 129
- US-A1- 2004 236 575
- US-A1- 2010 331 043

## Beschreibung

Die Erfindung betrifft ein Verfahren zur Identifizierung und Ausgabe des Inhalts eines in einer Quellsprache verfassten Hinweistextes in einer Zielsprache und eine Einrichtung zur Durchführung des Verfahrens.

Zur Klärung von Situationen, zur Übermittlung von Anweisungen oder Verboten, für Empfehlungen oder auch grundsätzlich zur Information sind oft Hinweistexte auf entsprechenden Schildern vorgesehen. Besonders sinnvoll und verbreitet ist dies im Bereich des Straßenverkehrs. Jedoch sind solche Hinweise auch bei der Regelung des Personenverkehrs durch Hinweisschilder in Städten oder in anderen Sachzusammenhängen sinnvoll und verbreitet.

Ein Problem kann darin liegen, dass bei der Formulierung der entsprechenden Texte eine Sprache gewählt werden muss, diese jedoch nicht von allen potentiellen Empfängern der Botschaft verstanden wird. Dies ist besonders im Straßenverkehr problematisch, da Schilder falsch gedeutet werden können, wenn der Zusatztext nicht verstanden wird.

Es ist bekannt, durch Kamerasysteme entsprechende Texte zu erfassen und automatisch zu übersetzen. Ein Problem besteht dabei darin, dass die entsprechende Kamera den passenden Hinweistext zunächst erfassen und selektieren muss. Auch sind solche Systeme oft aufwendig und teuer.

Aus dem Stand der Technik sind auch bereits Systeme bekannt, die es ermöglichen, einen gesprochenen Text klanglich zu erfassen und unmittelbar in eine Zielsprache zu übersetzen (EP 1 507 129 B1). Es ist weiter bekannt, in diesem Zusammenhang auch Kontextinformationen für eine Verbesserung der Übersetzungsqualität heranzuziehen. Aus der EP 1 220 200 A1 ist ein Verfahren bekannt, mittels dessen durch Erfassung gesprochener Texte Informationen in ein System eingebracht werden können, wobei zur Zuordnung von Bedeutung zu den klanglich erfassten Daten Aussprachelexika und landessprach- bzw. dialektbezogene Referenzlexika verwendet werden.

Die bekannten Lösungen lassen das Problem außer Acht, dass es einem Nutzer gegebenenfalls nur sehr schwierig möglich ist, einen fremdsprachlichen, ihm unverständlichen Text auszusprechen, so dass das entsprechende System nicht an eine adäquate klangliche Repräsentation des Hinweistextes gelangt.

Der vorliegenden Erfindung liegt somit die Aufgabe zugrunde, ein Verfahren und eine Einrichtung zu schaffen, die die Identifizierung und Ausgabe des Inhaltes eines Hinweistextes unter Verwendung einer klanglichen Erfassung qualitativ verbessern.

Die Aufgabe wird durch ein erfindungsgemäßes Verfahren mit den Merkmalen der Erfindung gemäß Patentanspruch 1 und zudem durch eine erfindungsgemäße Einrichtung gemäß Patentanspruch 10 gelöst.

Die Erfindung bezieht sich im Einzelnen auf ein Verfahren zur Identifizierung und Ausgabe des Inhalts eines in einer Quellsprache verfassten Hinweistextes, insbesondere eines Verkehrsschildes, in einer Zielsprache, bei dem
- ein auf dem Hinweistext basierender gesprochener Text klanglich erfasst wird,
- den erfassten akustischen Daten erste Schriftinformationen unter Berücksichtigung der Ausspracheregeln der Zielsprache zugeordnet werden,
- den ersten Schriftinformationen zweite Schriftinformationen wenigstens einer potentiellen Quellsprache zugeordnet werden,
- den zweiten Schriftinformationen in der Quellsprache eine Bedeutung zugeordnet und diese in die Zielsprache übersetzt wird und
- die Übersetzung in der Zielsprache ausgegeben wird.

Das erfindungsgemäße Verfahren adressiert das Problem, den Hinweistext in der Quellsprache einer Übersetzungseinrichtung zu übermitteln, ohne dass der Text orthographisch übermittelt oder nach den Regeln der Quellsprache regelgemäß ausgesprochen werden muss. Es besteht nämlich oft das Problem, dass ein Nutzer, für den die Hinweistexte übersetzt werden sollen, nicht nur die Quellsprache nicht versteht, sondern Hinweise in der Quellsprache auch nicht korrekt aussprechen kann. Das erfindungsgemäße Verfahren gibt hierzu die Möglichkeit, den Hinweistext in der Quellsprache nach den Regeln der Zielsprache oder einer anderen Sprache auszusprechen, wobei in diesem Zusammenhang unter Aussprache die Umsetzung von Schriftinformationen in Phoneme verstanden wird. Nach dem erfindungsgemäßen Verfahren kann unter Berücksichtigung der vom Nutzer angewendeten Ausspracheregeln die Schriftinformation des Quelltextes rekonstruiert werden. Dieser kann dann ohne weiteres die Bedeutung in der Quellsprache zugeordnet und die so gewonnene Information übersetzt werden.

Die Übersetzung kann dann in der Zielsprache entweder schriftlich oder klanglich, durch maschinelles Vorlesen, ausgegeben werden.

Die Anwendung des erfindungsgemäßen Verfahrens ist besonders im Straßenverkehr hilfreich, wenn ein Nutzer sich mit seinem Fahrzeug beispielsweise im fremdsprachigen Ausland befindet. Viele Länder nutzen gemeinsame Schriften, wie beispielsweise in Europa die lateinische Schrift, auch wenn einzelne Schriftinformationen in den verschiedenen Sprachen unterschiedlich ausgesprochen werden. Bewegt sich ein Nutzer in einem Land, das eine andere Sprache benutzt, so ist es noch möglich, zu versuchen, zumindest einzelne Buchstaben auszusprechen, wobei beispielsweise im griechischen oder kyrillischen Alphabet einige Buchstaben für den Nutzer des lateinischen Alphabets erkennbar oder zumindest beschreibbar sind. Für einen solchen Fall ist es beispielsweise möglich, den Hinweistext in der Zielsprache zumindest zu buchstabieren, wobei Leerstellen bei nicht darstellbaren oder verständlichen Buchstaben angesagt werden und die einzelnen verständlichen Buchstaben angesagt werden können.

Eine vorteilhafte Ausgestaltung der Erfindung sieht vor, dass den ersten Schriftinformationen zweite Schriftinformationen der Quellsprache unter Berücksichtigung schriftbildlicher Ähnlichkeit zugeordnet werden. Ein Nutzer wird oft den fremdsprachigen Text so lesen, dass der Lesevorgang auf die Verwendung ihm bekannter Phoneme und Schriftinformationen hinausläuft. Die Identität von Schriftinformationen der Ziel- und Quellsprache liegt im Allgemeinen nicht vor. Über eine eigene Metrik, also eine spezifische Ähnlichkeitsbetrachtung, müssen daher die ersten Schriftinformationen der Zielsprache in die zweiten Schriftinformationen der Quellsprache umgesetzt werden.

Eine weitere vorteilhafte Ausgestaltung der Erfindung sieht vor, dass dem klanglich erfassten Text auf der Basis klanglicher Ähnlichkeit eine oder mehrere Varianten von Schriftinformationen der Zielsprache, deren Aussprache einander klanglich ähnlich ist, zugeordnet werden. Da die Aussprache des Nutzers von einer gewissen Unsicherheit geprägt sein wird, da ihm bewusst ist, dass er einen fremdsprachigen Text ausspricht, ist es sinnvoll, mehrere Varianten einer schriftlichen Umsetzung in Betracht zu ziehen, um am Ende eine erste Schriftinformation auswählen zu können, die mit den zur Verfügung stehenden und im Kontext sinnvollen zweiten Schriftinformationen der Quellsprache eine möglichst große Übereinstimmung bietet. Die genannte Ausgestaltung der Erfindung erlaubt es, mit einer möglichst sinnvollen Anzahl an möglichen ersten Schriftinformationen zu starten, um zu einer sinnvollen Übersetzung zu gelangen.

Die Erfindung kann weiterhin vorteilhaft dadurch ausgestaltet werden, dass, falls mehrere Varianten von ersten Schriftinformationen der Zielsprache vorliegen, mehreren dieser Varianten schriftbildlich ähnliche zweite Schriftinformationen der Quellsprache zugeordnet werden und die schriftbildliche Ähnlichkeit der Schriftinformationen der Quellsprache zu denen der Zielsprache für die verschiedenen Varianten verglichen wird. Über die Ähnlichkeit der zur Verfügung stehenden ersten Schriftinformationen mit entsprechenden zweiten Schriftinformationen der Quellsprache unter Berücksichtigung im Kontext sinnvoller Bedeutungen kann in diesem Rahmen die sinnvollste Übersetzung ermittelt werden. Insgesamt können auf diese Weise in zwei Schritten sowohl klangliche Unsicherheiten/Streubreiten in der Aussprache berücksichtigt als auch über die Zuordnung verschiedener Schriftinformationen, die möglicherweise trotz unterschiedlicher Schreibung gleich ausgesprochen werden können oder die bei gleicher Schriftweise verschiedene Aussprachen zulassen, insgesamt eine mehrdimensionale Ähnlichkeitsmetrik konstruiert werden, die die Zuordnung sinnvoller Inhalte in der Zielsprache zu den ausgesprochenen Texten der Quellsprache erlaubt.

Es kann dabei vorteilhaft vorgesehen sein, dass die Quellsprache oder die potentiellen Quellsprachen durch den Ort, an dem das Verfahren durchgeführt wird, insbesondere durch Angaben eines Navigationsgerätes, durch Angaben eines lokalen Telefonserviceanbieters, durch GPS-(Global Positioning System-)Daten, durch Daten von Radiostationen oder durch Verkehrsfunkangaben ermittelt wird.

Weiterhin kann es sinnvoll und vorteilhaft sein, die Zielsprache durch die Einstellung eines Service-/Bedienungsmenüs, das der Nutzer bedient, festzustellen oder durch Einstellungen ebenfalls genutzter Human/Machine-Interfaces. Es kann auch vorgesehen sein, den Nutzer seine Zielsprache, d. h. eine Sprache, die er gut beherrscht, eingeben zu lassen.

Die Erfindung kann weiterhin vorteilhaft vorsehen, dass jeweils der klanglich erfasste, gesprochene Text zusammen mit der zugeordneten zweiten Schriftinformation der Quellsprache gespeichert und bei weiteren Identifizierungsvorgängen jeweils der aktuell klanglich erfasste gesprochene Text mit früher erfassten, klanglich ähnlichen Texten verglichen und die diesen klanglich ähnlichen Texten zugeordneten Schriftinformationen der Quellsprache herangezogen werden.

Mittels des erfindungsgemäßen Verfahrens kann somit auf frühere Zuordnungen zurückgegriffen werden, so dass bei entsprechender Ähnlichkeit der gesprochenen Texte eine Zuordnung direkt aus einem Speicher abgerufen werden kann. Hierzu kann es beispielsweise auch sinnvoll sein, die am Ende angezeigten Hinweistexte in der Zielsprache vom Nutzer als passend quittieren zu lassen, bevor sie in eine Datenbank von positiv zugeordneten Texten gelangen. Wird die Quittierung durch den Nutzer versagt, so würde die entsprechende Zuordnung des Hinweistextes in der Zielsprache nicht gespeichert. In diesem Fall kann das Zuordnungsverfahren durch erneutes Vorlesen des Hinweistextes in der Quellsprache durch den Nutzer von neuem gestartet werden.

Es kann auch vorteilhaft vorgesehen sein, dass laufend Beispiele für klanglich erfasste, gesprochene Texte und diesen zugeordnete Schriftinformationen einer Quellsprache sowie entsprechende Übersetzungen in eine Zielsprache mittels eines Datennetzwerkes erfasst und gespeichert werden. In diesem Fall können gesprochene Texte und entsprechend zugeordnete Texte in einer Zielsprache oder in mehreren Zielsprachen in einer Datenbank gespeichert werden, die entsprechende Daten nicht nur von einem Nutzer, sondern von einer Vielzahl von Nutzern erhält und jeweils positive Zuordnungen, d. h. nicht verworfene Zuordnungen, für alle Nutzer zur Verfügung stellt. Letztlich kann die Erfindung vorteilhaft auch vorsehen, dass die Zuordnung von Schriftinformationen zu dem klanglich erfassten Text durch eine Bildanalyse unterstützt wird. Dabei kann mittels eines Kamerabildes sowohl der zu erfassende Hinweistext selbst als auch die Kontextsituation oder eines von beiden erfasst werden, um einerseits die Erfassung des Textes optisch zu unterstützen und andererseits die Zuordnung von Bedeutungen durch genauere Berücksichtigung eines bekannten Kontextes zu unterstützen.

Die Erfindung bezieht sich außer auf ein Verfahren der oben beschriebenen Art auch auf eine Einrichtung zur Identifizierung und Ausgabe des Inhalts eines in einer Quellsprache verfassten Hinweistextes, insbesondere eines Verkehrsschildes, in einer Zielsprache mit
- einer ersten Einrichtung zur klanglichen Erfassung eines gesprochenen Hinweistextes,
- einer zweiten Einrichtung zur Zuweisung von ersten Schriftinformationen zu dem gesprochenen Hinweistext unter Berücksichtigung von Ausspracheregeln der Zielsprache,
- einer dritten Einrichtung zur Zuweisung von zweiten Schriftinformationen der Quellsprache zu den durch die zweite Einrichtung zugewiesenen ersten Schriftinformationen der Zielsprache sowie
- einer vierten Einrichtung zur Übersetzung des durch die zweiten Schriftinformationen repräsentierten Texts der Quellsprache in die Zielsprache und
- einer fünften Einrichtung zur Ausgabe der Übersetzung in der Zielsprache.

Dabei verfügt typischerweise die erste Einrichtung zur Erfassung eines gesprochenen Hinweistextes über ein Mikrofon, das beispielsweise gesprochene Sprache des Nutzers aufnehmen kann. Es ist jedoch auch denkbar, dass die Erfassung der klanglichen Daten mittels eines entsprechenden Datensatzes, beispielsweise durch Aufnahme einer Klangdatei, erfolgt.

Die zweite Einrichtung zur Zuweisung von ersten Schriftinformationen zu dem gesprochenen Hinweistext kann üblicherweise als eine Datenverarbeitungseinrichtung gestaltet sein, die über eine Datenbank von Schriftinformationen und Klangmustern verfügt und über eine Ähnlichkeitsmetrik eine Zuweisung vornimmt. Die Datenverarbeitungseinrichtung kann vor Ort in der Nähe des Nutzers vorgesehen sein, die Datenverarbeitung kann jedoch auch zentral auf einem Rechner durchgeführt werden, der mittels eines Datenverarbeitungsnetzes mit entsprechenden Einrichtungen von Nutzern verbunden ist.

Die dritte Einrichtung zur Zuweisung von zweiten Schriftinformationen der Quellsprache zu den ersten Schriftinformationen kann ebenfalls als Datenverarbeitungseinrichtung lokal in der Nähe des Nutzers oder auf einem zentralen Rechner vorgesehen sein.

Ebenso verhält es sich mit der vierten Einrichtung zur Übersetzung des durch die zweiten Schriftinformationen repräsentierten Textes in die Zielsprache.

Die fünfte Einrichtung zur Ausgabe der Übersetzung in der Zielsprache kann beispielsweise als Bildschirm, Schriftanzeige oder als klangliche Ausgabeeinheit in Form eines Lautsprechers ausgestaltet sein. Wird die Einrichtung in einem Kraftfahrzeug betrieben, so ist sie sinnvollerweise mit anderen Datenverarbeitungseinrichtungen, beispielsweise von Multimediaeinrichtungen des Fahrzeugs, wenigstens teilweise verbunden und nutzt Ein- und Ausgabeeinrichtungen dieser Multimediageräte, wie beispielsweise das Mikrofon einer Freisprechanlage und entsprechende Lautsprecher.

Auch die Ermittlung von Quell- und Zielsprache ist besonders vereinfacht, wenn die Einrichtungen zur Identifizierung und Ausgabe des Inhalts von Hinweistexten in die Multimediaeinrichtungen eines Fahrzeugs integriert sind.

Im Folgenden wird die Erfindung anhand eines Ausführungsbeispiels in den folgenden Figuren gezeigt und nachfolgend beschrieben.

Dabei zeigt:
- Fig. 1: eine Darstellung der ersten, zweiten, dritten, vierten und fünften Einrichtung,
- Fig. 2: eine Darstellung ähnlich der in Fig. 1, wobei die Integration von Zusatzdaten bei der zweiten Einrichtung detaillierter dargestellt ist,
- Fig. 3: schematisch die Darstellung eines Kraftfahrzeugs mit einer erfindungsgemäßen Einrichtung sowie
- Fig. 4: eine schematische Darstellung der Komponenten der erfindungsgemäßen Einrichtung.

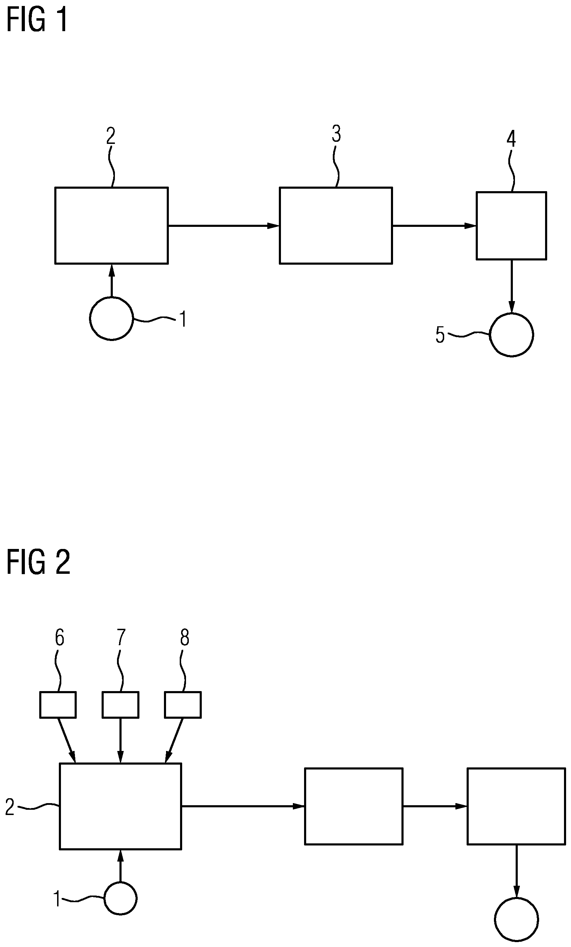

Figur 1 zeigt schematisch eine erste Einrichtung 1 zur Erfassung von klanglichen Informationen eines gesprochenen Hinweistextes, beispielsweise in Form eines Mikrofons und einer elektronischen Abtasteinrichtung, wobei die erste Einrichtung 1 mit einer zweiten Einrichtung 2 verbunden ist, in der den klanglichen Informationen, die durch die erste Einrichtung 1 aufgenommen werden, Schriftinformationen der Zielsprache zugeordnet werden.

Die zweite Einrichtung 2 ist mit einer dritten Einrichtung 3 verbunden, in der den ersten Schriftinformationen in der Zielsprache zweite Schriftinformationen in der Quellsprache zugeordnet werden. Die dritte Einrichtung 3 ist mit der vierten Einrichtung 4 verbunden und leitet dieser die selektierten Schriftinformationen in der Quellsprache zu. In der vierten Einrichtung 4 wird den zweiten Schriftinformationen Bedeutung in der Quellsprache zugeordnet, die dann in die Zielsprache übersetzt und an die fünfte Einrichtung 5 weitergegeben wird. Die fünfte Einrichtung 5 ist eine Ausgabeeinrichtung, durch die in der Zielsprache der Inhalt des zu übersetzenden Hinweistextes ausgegeben wird.

Die einzelnen Einrichtungen 1, 2, 3, 4 können beispielsweise als einzelne Datenverarbeitungseinrichtungen mit anwendungsspezifischen Schaltkreisen (ASICs), jedoch auch als Datenverarbeitungsmodule ausgeführt sein.

Jede der Einrichtungen 2, 3, 4 kann entweder lokal in der räumlichen Nähe des Nutzers angeordnet und mit den übrigen Einrichtung verbunden sein, beispielsweise mittels elektrischer oder optischer Datenleitungen, jedoch kann jede der Einrichtungen 2, 3, 4 auch entfernt vom Nutzer und mit den übrigen Einrichtungen mittels eines Datennetzes verbunden sein.

Die einzelnen Einrichtungen 1, 2, 3, 4 weisen jeweils Speicher auf, in denen beispielsweise zur Verfügung stehende Phoneme und Schriftinformationen gespeichert sind. Die zweite Einrichtung 2 weist zudem eine Vergleichseinrichtung auf, die die klangliche Darstellung verschiedener in der Zielsprache zur Verfügung stehender Schriftinformationen mit den klanglichen Eingangsdaten vergleicht und aus den Vergleichsdaten die ähnlichste, d. h. mit höchster Wahrscheinlichkeit zutreffende Gruppe von Schriftinformationen der Zielsprache auswählt. Die zweite Einrichtung 3 weist eine Vergleichseinrichtung auf, die jeweils die Ähnlichkeit der ersten Schriftinformationen mit zur Verfügung stehenden zweiten Schriftinformationen der Quellsprache überprüft und aus diesen die ähnlichsten Entsprechungspaare auswählt. Bei der Zuweisung von wahrscheinlich zutreffenden Schriftinformationen kann sowohl kann die zweite Einrichtung 2 als auch die dritte Einrichtung 3 Kontextinformationen, beispielsweise über die aktuelle Fahrsituation, sofern die Erfindung in einem Kraftfahrzeug verwirklicht wird, berücksichtigen.

In Figur 2 ist hierzu dargestellt, dass die zweite Einrichtung 2 mit Informationseinrichtungen 6, 7, 8 verbunden ist, von denen die erste Informationseinrichtung 6 der zweiten Einrichtung beispielsweise Informationen über die Zielsprache übermittelt. Hierzu kann die erste Informationseinrichtung 6 beispielsweise mit einer Eingabeeinrichtung verbunden sein, in die der Nutzer seine Zielsprache oder eine potentielle Zielsprache eingeben kann. Die erste Informationseinrichtung 6 kann jedoch auch mit einem von dem Nutzer bedienten Aggregat verbunden sein, das die Wahl einer Bedienungssprache zulässt, und die gewählte Bedienungssprache kann durch die erste Informationseinrichtung 6 ermittelt werden.

Die zweite Informationseinrichtung 7 kann Informationen über den Kontext, d. h. beispielsweise über das Umfeld des Kraftfahrzeugs und/oder über die Fahrsituation, erfassen. Zu diesem Zweck kann die zweite Informationseinrichtung beispielsweise mit nach außen gerichteten Kameras oder anderen Sensoren des Fahrzeugs verbunden sein. Entsprechende Kameras können beispielsweise auch die zu lesenden Hinweistexte erfassen und hierdurch Zusatzinformationen liefern.

Die dritte Informationseinrichtung 8 erfasst beispielsweise die Quellsprache, indem sie bei der Verwendung innerhalb eines Kraftfahrzeugs beispielsweise den geografischen Ort des Fahrzeugs feststellt und aus diesem auf die im Straßenverkehr verwendete Sprache schließt. Die Feststellung des geografischen Ortes kann beispielsweise mittels der Analyse von Telefonserviceanbietern, der Analyse von Informationen aus einem Navigationssystem, der direkten Analyse von GPS-Daten oder Ähnlichem gewonnen werden. Letztlich kann auch eine Eingabeeinrichtung vorgesehen sein, die dem Nutzer die Eingabe der Quellsprache erlaubt.

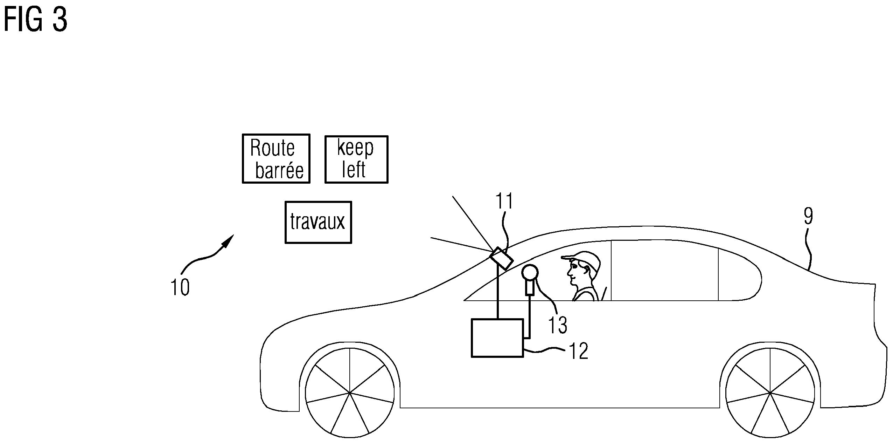

In Figur 3 ist schematisch die Außenansicht eines Fahrzeugs 9 gezeigt sowie schematisch mögliche Verkehrsschilder 10 mit französischsprachigem bzw. englischsprachigem Text. Der Text kann durch eine Kamera 11 aufgenommen werden, die mit der erfindungsgemäßen Einrichtung 12 verbunden ist. Mit der erfindungsgemäßen Einrichtung 12 ist zudem ein Mikrofon 13 verbunden, das beispielsweise mit einem in einer Freisprecheinrichtung des Fahrzeugs verwendeten Mikrofon identisch sein kann. Zudem ist die Einrichtung 12 mit einem Bildschirm des Kraftfahrzeugs und/oder einem Lautsprecher verbunden.

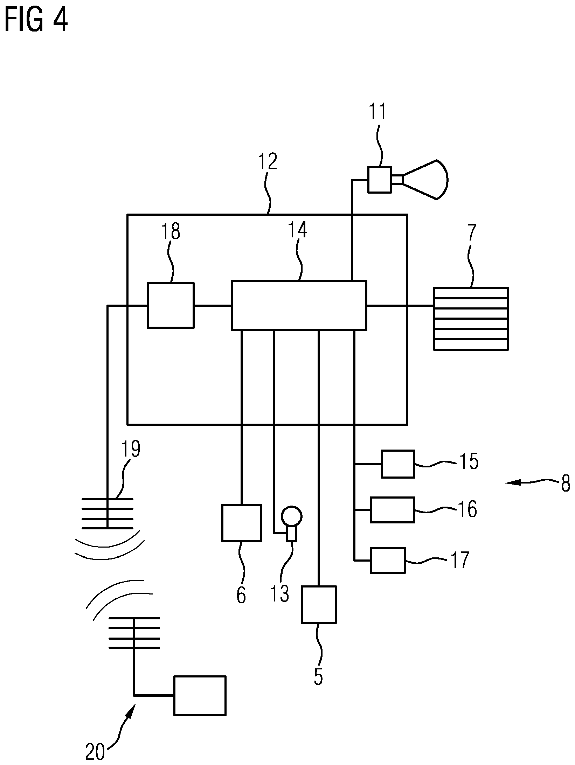

Figur 4 zeigt schematisch die gesamte erfindungsgemäße Einrichtung 12 mit einem Mikrofon 13, über das klangliche Informationen beispielsweise vom Nutzer vorgelesener Hinweistexte eingespielt werden können. Die zweite, dritte und vierte Einrichtung sind in einer gemeinsamen Datenverarbeitungseinrichtung 14 als Module zusammengefasst. Eine erste Informationseinrichtung 6 ist mit einer Bedieneinrichtung einer Multimediaeinrichtung des Kraftfahrzeugs verbunden und liefert Informationen über die Zielsprache. Eine zweite Informationseinrichtung 7 fasst verschiedene Sensoren des Kraftfahrzeugs zusammen, wie beispielsweise die Verkehrsdichte, die Steigung der Fahrstrecke, die Breite der Fahrbahn, die Geschwindigkeit des Fahrzeugs, Nässe der Fahrbahn bzw. Wetterdaten und Ähnliches. Zudem werden Informationen über die Kamera 11 an die Datenverarbeitungseinrichtung 14 geliefert. Die Kamera 11 kann dabei das Umfeld des Fahrzeugs aufnehmen, jedoch auch beispielsweise die zu übersetzenden Hinweistexte selbst.

Die dritte Informationseinrichtung 8 weist die Aggregate auf, die auf die Quellsprache des zu übersetzenden Hinweistextes hindeuten können, wie beispielsweise eine Telefoneinrichtung 15, ein Navigationsgerät 16 oder ein einzelnes GPS-Gerät 17. Innerhalb der Einrichtung 12 ist eine Kommunikationseinrichtung 18 eingezeichnet, die mit der zweiten, dritten und vierten Einrichtung 14 kommuniziert und die andererseits mit einer Antenne 19 versehen ist, die die Verbindung zu einem übergeordneten Datennetz mit einer Datenverarbeitungszentrale 20 repräsentiert. Das Datenverarbeitungsnetz kann selbstverständlich auch drahtgebunden angelegt sein. Innerhalb des Datenverarbeitungsnetzes können erkannte Hinweistexte, die entsprechenden klanglichen Daten zugeordnet werden, gemeinsam mit diesen gespeichert und allen Teilnehmern des Datennetzes zur Verfügung gestellt werden. Damit kann die Zuordnung bei neu zu erkennenden Texten wesentlich beschleunigt werden. Die Zuordnung von Schriftinformationen zu den klanglich erfassten vorgelesenen Texten kann jeweils lokal innerhalb der Einrichtung 12 in der zweiten, dritten und vierten Einrichtung 2, 3, 4 geschehen oder auch teilweise über das Datenverarbeitungsnetz an die zentrale Datenverarbeitungseinrichtung 20 ausgelagert werden.

## Patentansprüche

1. Verfahren zur Identifizierung und Ausgabe des Inhalts eines in einer Quellsprache verfassten Hinweistextes, insbesondere eines Verkehrsschildes, in einer Zielsprache, bei dem
- ein auf dem Hinweistext basierender gesprochener Text klanglich erfasst wird,
- den erfassten akustischen Daten erste Schriftinformationen unter Berücksichtigung der Ausspracheregeln der Zielsprache zugeordnet werden,
- den ersten Schriftinformationen zweite Schriftinformationen wenigstens einer potentiellen Quellsprache zugeordnet werden,
- den zweiten Schriftinformationen in der Quellsprache eine Bedeutung zugeordnet und diese in die Zielsprache übersetzt wird und
- die Übersetzung in der Zielsprache ausgegeben wird.

2. Verfahren nach Anspruch 1, **dadurch gekennzeichnet, dass** den ersten Schriftinformationen zweite Schriftinformationen der Quellsprache unter Berücksichtigung schriftbildlicher Ähnlichkeit zugeordnet werden.

3. Verfahren nach Anspruch 1 oder 2, **dadurch gekennzeichnet, dass** dem klanglich erfassten Text auf der Basis klanglicher Ähnlichkeit eine oder mehrere Varianten von Schriftinformationen der Zielsprache, deren Aussprache einander klanglich ähnlich ist, zugeordnet werden.

4. Verfahren nach Anspruch 3, **dadurch gekennzeichnet, dass**, falls mehrere Varianten von ersten Schriftinformationen der Zielsprache vorliegen, mehreren dieser Varianten schriftbildlich ähnliche zweite Schriftinformationen der Quellsprache zugeordnet werden und die schriftbildliche Ähnlichkeit der Schriftinformationen der Quellsprache zu denen der Zielsprache für die verschiedenen Varianten verglichen wird.

5. Verfahren nach einem der Ansprüche 1 bis 4, **dadurch gekennzeichnet, dass** die Quellsprache durch den Ort, an dem das Verfahren durchgeführt wird, insbesondere durch Angaben eines Navigationsgeräts, durch Angaben eines lokalen Telefonserviceanbieters, durch Angaben eines Global Positioning System, GPS, durch Angaben von Radiostationen oder Verkehrsfunkangaben ermittelt wird.

6. Verfahren nach einem der Ansprüche 1 bis 5, **dadurch gekennzeichnet, dass** die Zielsprache durch Abfrage der Einstellungen eines Service-/Bedienungsmenüs einer Bedienungseinrichtung, insbesondere eines Multimediaaggregats, oder durch Abfrage einer einfachen Eingabe einer Wunschsprache ermittelt wird.

7. Verfahren nach einem der Ansprüche 1 bis 6, **dadurch gekennzeichnet, dass** jeweils der klanglich erfasste, gesprochene Text zusammen mit der zugeordneten zweiten Schriftinformation der Quellsprache gespeichert und bei weiteren Identifizierungsvorgängen jeweils der aktuell klanglich erfasste gesprochene Text mit früher erfassten, klanglich ähnlichen Texten verglichen und die diesen klanglich ähnlichen Texten zugeordneten Schriftinformationen der Quellsprache herangezogen werden.

8. Verfahren nach einem der Ansprüche 1 bis 7, **dadurch gekennzeichnet, dass** laufend Beispiele für klanglich erfasste, gesprochene Texte und diesen zugeordnete Schriftinformationen einer Quellsprache sowie entsprechende Übersetzungen in eine Zielsprache mittels eines Datennetzwerkes erfasst und gespeichert werden.

9. Verfahren nach einem der Ansprüche 1 bis 8, **dadurch gekennzeichnet, dass** die Zuordnung von Schriftinformationen zu dem klanglich erfassten Text durch eine Bildanalyse unterstützt wird.

10. Einrichtung zur Identifizierung und Ausgabe des Inhalts eines in einer Quellsprache verfassten Hinweistextes, insbesondere eines Verkehrsschildes, in einer Zielsprache mit
- einer ersten Einrichtung (1) zur klanglichen Erfassung eines gesprochenen Hinweistextes,
- einer zweiten Einrichtung (2) zur Zuweisung von ersten Schriftinformationen zu dem gesprochenen Hinweistext unter Berücksichtigung von Ausspracheregeln der Zielsprache,
- einer dritten Einrichtung (3) zur Zuweisung von zweiten Schriftinformationen der Quellsprache zu den durch die zweite Einrichtung zugewiesenen ersten Schriftinformationen der Zielsprache sowie
- einer vierten Einrichtung (4) zur Übersetzung des durch die zweiten Schriftinformationen repräsentierten Texts der Quellsprache in die Zielsprache und
- einer fünften Einrichtung (5) zur Ausgabe der Übersetzung in der Zielsprache.

## Claims

1. Method for identifying and outputting the content of a textual notice written in a source language, in particular a traffic sign, in a target language, in which
- spoken text based on the textual notice is phonetically captured,
- first written information is assigned to the captured acoustic data taking into account the pronunciation rules of the target language,
- second written information in at least one potential source language is assigned to the first written information,
- a meaning is assigned to the second written information in the source language and is translated into the target language, and
- the translation is output in the target language.

2. Method according to Claim 1, **characterized in that** second written information in the source language is assigned to the first written information taking into account visual similarity.

3. Method according to Claim 1 or 2, **characterized in that** one or more variants of written information in the target language, the pronunciation of which is phonetically similar, are assigned to the phonetically captured text on the basis of phonetic similarity.

4. Method according to Claim 3, **characterized in that**, if there are a plurality of variants of first written information in the target language, visually similar second written information in the source language is assigned to a plurality of these variants and the visual similarity of the written information in the source language to that in the target language is compared for the different variants.

5. Method according to one of Claims 1 to 4, **characterized in that** the source language is determined by the location at which the method is carried out, in particular by means of information from a navigation device, by means of information from a local telephone service provider, by means of information from a global positioning system, GPS, by means of information from radio stations or traffic broadcast information.

6. Method according to one of Claims 1 to 5, **characterized in that** the target language is determined by querying the settings of a service/operating menu of an operating device, in particular a multimedia unit, or by querying a simple input of a desired language.

7. Method according to one of Claims 1 to 6, **characterized in that** the phonetically captured spoken text is respectively stored together with the assigned second written information in the source language and, in the case of further identification processes, the currently phonetically captured spoken text is respectively compared with previously captured phonetically similar texts and the written information in the source language assigned to these phonetically similar texts is used.

8. Method according to one of Claims 1 to 7, **characterized in that** examples of phonetically captured spoken texts and written information in a source language assigned to said texts as well as corresponding translations into a target language are continuously captured and stored by means of a data network.

9. Method according to one of Claims 1 to 8, **characterized in that** the assignment of written information to the phonetically captured text is supported by image analysis.

10. Device for identifying and outputting the content of a textual notice written in a source language, in particular a traffic sign, in a target language, having
- a first device (1) for phonetically capturing a spoken textual notice,
- a second device (2) for allocating first written information to the spoken textual notice taking into account pronunciation rules of the target language,
- a third device (3) for allocating second written information in the source language to the first written information in the target language which is allocated by the second device, and
- a fourth device (4) for translating the text in the source language represented by the second written information into the target language, and
- a fifth device (5) for outputting the translation in the target language.

## Revendications

1. Procédé d'identification et de fourniture en sortie du contenu d'un texte informatif rédigé dans une langue source, en particulier d'un panneau de signalisation routière, dans une langue cible, dans lequel
- un texte énoncé sur la base du texte informatif est acquis phonétiquement,
- des premières informations écrites en tenant compte des règles de prononciation de la langue cible sont associées aux données acoustiques acquises,
- des deuxièmes informations écrites dans au moins une langue source potentielle sont associées aux premières informations écrites,
- une signification est associée aux deuxièmes informations écrites dans la langue source et est traduite en la langue cible, et
- la traduction dans la langue cible est fournie en sortie.

2. Procédé selon la revendication 1, **caractérisé en ce que** des deuxièmes informations écrites dans la langue source sont associées aux premières informations écrites en tenant compte d'une ressemblance visuelle de l'écriture.

3. Procédé selon la revendication 1 ou 2, **caractérisé en ce qu'**une ou plusieurs variantes d'informations écrites dans la langue cible dont les prononciations sont phonétiquement semblables, sont associées au texte acquis phonétiquement sur la base de la ressemblance phonétique.

4. Procédé selon la revendication 3, **caractérisé en ce que**, lorsque plusieurs variantes des premières informations écrites dans la langue cible sont présentes, des deuxièmes informations écrites dans la langue source sont associées à plusieurs desdites variantes semblables visuellement du point de vue de l'écriture et la ressemblance visuelle de l'écriture entre les informations écrites dans la langue source est comparée à celles de la langue cible pour les différentes variantes.

5. Procédé selon l'une quelconque des revendications 1 à 4, **caractérisé en ce que** langue source est déterminée en fonction du lieu où le procédé est mis en oeuvre, notamment en fonction d'indications d'un appareil de navigation, en fonction d'indications d'un opérateur de service téléphonique, en fonction d'indications d'un système de positionnement global, ou GPS, en fonction d'indications de stations radio ou d'informations sur la circulation.

6. Procédé selon l'une quelconque des revendications 1 à 5, **caractérisé en ce que** la langue cible est déterminée en demandant les réglages d'un menu de service/d'utilisation d'un dispositif de commande, en particulier d'un appareil multimédia, ou en demandant une entrée simple d'une langue souhaitée.

7. Procédé selon l'une quelconque des revendications 1 à 6, **caractérisé en ce que** le texte énoncé, acquis phonétiquement, en association avec la deuxième information écrite associée dans la langue source sont stockés et, lors de processus d'identification ultérieurs, le texte énoncé et acquis phonétiquement actuel est respectivement comparé à des textes phonétiquement semblables détectés antérieurement, et les informations écrites dans la langue source associées auxdits textes phonétiquement semblables sont prises en compte.

8. Procédé selon l'une quelconque des revendications 1 à 7, **caractérisé en ce que** des exemples de textes énoncés et acquis phonétiquement et des informations écrites dans une langue source qui leur sont associées ainsi que des traductions correspondantes dans une langue cible sont acquises et stockées en continu au moyen d'un réseau de données.

9. Procédé selon l'une quelconque des revendications 1 à 8, **caractérisé en ce que** l'association d'informations écrites avec le texte acquis phonétiquement est complétée par une analyse d'image.

10. Dispositif d'identification et de fourniture en sortie du contenu d'un texte informatif acquis dans une langue source, en particulier d'un panneau de signalisation routière, dans une langue cible, comportant
- un premier dispositif (1) destiné à acquérir phonétiquement un texte informatif énoncé,
- un deuxième dispositif (2) destiné à associer des premières informations écrites au texte informatif énoncé en tenant compte de règles de prononciation de la langue cible,
- un troisième dispositif (3) destiné à associer des deuxièmes informations écrites dans la langue source aux premières informations écrites dans la langue cible et associées par le deuxième dispositif, et
- un quatrième dispositif (4) destiné à traduire le texte représenté par les deuxièmes informations écrites dans la langue source en la langue cible, et
- un cinquième dispositif (5) destiné à fournir en sortie la traduction dans la langue cible.
